# EUROPÄISCHE PATENTSCHRIFT

(11) **EP 0 490 158 B1**
(45) Veröffentlichungstag und Bekanntmachung des Hinweises auf die Patenterteilung: **30.07.1997**
(21) Anmeldenummer: 91120114.3
(22) Anmeldetag: 26.11.1991
(51) Int. Cl.: C08G 18/10, C08G 18/32, D06M 15/37, D06N 3/14

(54) **Verfahren zur Herstellung von Polyurethanbeschichtungen**
Process for the preparation of polyurethane coatings
Procédé pour la préparation de revêtements de polyuréthane

(30) Priorität: 08.12.1990 DE 4039194
(43) Veröffentlichungstag der Anmeldung: 17.06.1992
(73) Patentinhaber: BAYER AG, 51368 Leverkusen (DE)
(72) Erfinder: Müller, Hans Werner, W-5000 Köln 80 (DE); Pisaric, Karl, W-5024 Pulheim (DE); Schmalstieg, Lutz, Dr., W-5000 Köln 1 (DE); Träubel, Harro, Dr., W-5090 Leverkusen 1 (DE)

(56) Entgegenhaltungen:
- EP-A- 0 006 174
- EP-A- 0 081 729
- EP-A- 0 239 870
- US-A- 3 428 610
- US-A- 4 581 433

## Beschreibung

Es ist bekannt, Substrate wie insbesondere Leder, Spaltleder und Textil im Direkt- und Umkehrverfahren aus Lösungen, Dispersionen oder über ein Reaktivverfahren zu beschichten. Verwiesen wird beispielsweise auf DE-A-3 309 992, DE-A-3 011 711, DE-A-2 826 232, DE-A-2 448 133 und insbesondere auf DE-A-3 522 978 und den darin diskutierten Stand der Technik. Aus der DE-A 2 448 133 ist bereits ein lösungsmittelfreies Beschichtungsverfahren bekannt, welches aber den Einsatz von Weichmachern erfordert.

Die (1) EP-A 81 729 beschreibt die Verwendung lösungsmittelfreier kalthärtender PU-Ausgangskomponenten, die ein Präpolymer und eine Polyaminkomponente enthalten, zur Beschichtung von Metallen, Kunststoffen, Schaumstoffen, Gestein, Estrich oder Beton.

Die (2) US-PS 4 581 433 betrifft Überzugsmittel auf Basis von NCO-Präpolymeren und sterisch gehinderten aromatischen Diaminen und Ihre Verwendung zur Behandlung mineralischer Baumaterialien aus Beton oder Zielgelsteinen.

Die Literaturstellen (1) bzw. (2) konnten die Erfindung weder einzeln noch in Kombination miteinander nahelegen.

Die in der Praxis angewandten Beschichtungsverfahren haben den Nachteil, daß sie in Gegenwart von relativ viel Lösungsmitteln angewandt werden.

Der Erfindung lag deshalb die Aufgabe zugrunde, ein Beschichtungsverfahren, insbesondere im Umkehrverfahren bereitzustellen, das weitgehend in Abwesenheit von Lösungsmitteln unter Erhalt von Schichtdicken von 0,01 bis 3 mm, vorzugsweise 0,05 bis 0,4 mm und besonders bevorzugt 0,1 bis 0,3 mm durchgeführt werden kann.

Diese Beschichtungsverfahren sind dann schwierig durchzuführen, wenn das Substrat aus Leder, Spaltleder bzw. auf Kollagen oder Keratin basierenden Materialien besteht, da diese Materialien im allgemeinen keine Temperaturen über 150°C, vorzugsweise über 100°C, vertragen. Temperaturerhöhung auf 100-150°C zur Aktivierung wenig aktiver Systeme scheidet deshalb aus. Andererseits muß im Interesse einer hohen Produktivität dafür Sorge getragen werden, daß die Systeme rasch genug reagieren, damit man die beschichteten Substrate überhaupt handhaben kann. Bei Systemen mit organischen Lösemitteln ist dies im Vergleich zu lösungsmittelfreien oder Wasser enthaltenden einfacher, weil übliche organische Lösungsmittel beim Auftragen weitgehend verdampfen und so niedrigviskose Mischungen - wie sie für die Verformung wichtig sind - nach dem Auftrag in hochviskose umgewandelt werden.

Gegenstand der Erfindung ist ein Verfahren zur Beschichtung von Leder durch Mischen eines Beschichtungsmittels aus mindestens einem aromatischen Polyisocyanat und mindestens einer isocyanatreaktiven Komponente in einer Mischvorrichtung und anschließendes Auftragen des Beschichtungsmittels auf das Leder,
dadurch gekennzeichnet, daß
a) das System aus Polyisocyanat und isocyanatreaktiver Komponente eine Reaktivität von 30 bis 500 sec bei 23°C aufweist,
b) die Beschichtung mit maximal 10 Gew.-% Lösungsmittel, bezogen auf das System, durchgeführt wird,
c) die isocyanatreaktive Komponente
   (i) eine halogenfreie Verbindung mit mindestens 2 Aminogruppen, die an mindestens einen aromatischen C₅-C₁₂-Ring gebunden sind, wobei diese Verbindung den Aminogruppen benachbarte C₂-C₃₀-Alkylgruppen trägt,
   (ii) gegebenenfalls Polyol und
   (iii) gegebenenfalls Wasser enthält.

Gegenstand der Erfindung sind außerdem die nach diesem Verfahren erhältlichen beschichteten Leder.

Unter Lösungsmittel werden derartige Verbindungen verstanden, die das Polyisocyanat und/oder die isocyanatreaktive Komponente unter Verarbeitungsbedingungen im nennenswerten Umfange lösen, insbesondere Ketone, Ester, Ether und aromatische Kohlenwasserstoffe oder Kohlenwasserstoffgemische, z.B. Aceton, Methylethylketon, Pentanon, Hexanon, Cyclohexanon, Ethylacetat, Isopropylacetat, Methoxy-propyl-acetat, (Di-)Propylenglykol-diacetat, Methylpropionat, Ethylpropionat, Toluol, technische Lösungsmittelgemische auf araliphatischer, aliphatischer oder aromatischer Grundlage, Diisopropylether, Di-n-propylether, Di-n-butylether, Di-isobutylether, Tetrahydrofuran, Furan, Dioxan.

Die unter a) angegebene Reaktivität wird wie folgt bestimmt:

Man stellt eine 50 gew.-%ige Lösung der Isocyanatkomponente in Ethylacetat her. Diese Lösung temperiert man auf 23°C. Sodann vermischt man die anderen zur Reaktion erforderlichen Komponenten ebenfalls in 50 gew.-%iger Ethylacetat-Lösung mit der Isocyanat-Lösung. Alle 30 Sekunden wird an einem Rotationsviskosimeter der Firma Hake (Typ VT 180, Prüfkörper E 100) die Viskosität bestimmt. Die Zeit, die verstreicht, um eine Viskosität von 60 000 mPa.s zu erreichen, wird als die Reaktivität bezeichnet. Die Reaktivität soll zwischen 30 Sekunden und 500 Sekunden liegen. Bevorzugt liegt die Reaktivität zwischen 100 Sekunden und 500 Sekunden, besonders bevorzugt zwischen 200 Sekunden und 400 Sekunden.

In einer bevorzugten Ausführungsform ist das Polyisocyanat ein Isocyanatprepolymeres mit einem mittleren Molekulargewicht von 500 bis 10.000, vorzugsweise 1.200 bis 4.000, und die isocyanatreaktive Komponente kann Wasser (das mit einem Teil der Isocyanatgruppen des NCO-Prepolymers zu Aminogruppen reagiert) und/oder ein sterisch gehindertes Diamin, beispielsweise Diethyltoluoldiamin enthalten.

In einer weiteren bevorzugten Ausführungsform wird als isocyanatreaktive Komponente ein Polyol mit einem mittleren Molekulargewicht >500, insbesondere >1.800 und <20.000 und zusätzlich ein OH-Gruppen enthaltender Kettenverlängerer mit einem Molekulargewicht <500 verwendet. Ein geeigneter Kettenverlängerer ist ein Glykol, wie z.B. Ethylenglykol, Butandiol, Hexandiol, Bis-hydroxyethoxy-benzol, sowie die bekannten Kettenverlängerer der Urethanchemie, ein besonders geeignetes Polyol ein Polyadipat, ein Polypropylenglykolether, der auch Ethylenoxidreste enthalten kann, ein Polycaprolacton, Polycarbonat oder Polytetrahydrofuran mit einem mittleren Molekulargewicht von 500 bis 20.000.

Im Falle der Glykolverlängerung werden die bekannten Polyisocyanate auf aromatischer oder aliphatischer Basis eingesetzt.

Bevorzugte aromatische Polyisocyanate sind 2,4- oder 2,6-Toluylendiisocyanat, 4,4-Diisocyanato-diphenylmethan, 1,5- bzw. 1,8-Naphthylendiisocyanat oder Gemische dieser Verbindungen.

Das erfindungsgemäße Verfahren wird lösungsmittelarm oder bei maximal 10 Gew.-% Lösungsmittel, bezogen auf das System, durchgeführt In einer bevorzugten Ausführungsform werden weniger als 3 Gew.-% Lösungsmittel, insbesondere überhaupt kein Lösungsmittel, verwendet.

Das Isocyanat und die isocyanatreaktive Komponente werden vorzugsweise nach der Vermischung unmittelbar durch eine Spritzdüse auf das Substrat selbst oder einen einstweiligen Träger gesprüht und anschließend mit Spaltleder oder ähnlichem Material belegt.

Die NCO-Prepolymeren sollen nach ihrer Bildung einen möglichst geringen Gehalt an freien, monomeren Diisocyanaten aufweisen, d.h. im allgemeinen einen Gehalt unter 3 Gew.-%, vorzugsweise unter 2 Gew.-%, insbesondere unter 1 Gew.-% und speziell unter 0,5 Gew.-% an freien monomeren Diisocyanaten. Dies wird dadurch erreicht, daß man bei der NCO-Prepolymerbildung entweder bei einem Molverhältnis von 2:1 arbeitet oder die gegebenenfalls über ein Molverhältnis von 2:1 (NCO/OH) hinausgehenden Mengen an Diisocyanaten durch Vakuumdestillation, Dünnschichtdestillation oder geeignete Extraktion aus den gebildeten NCO-Prepolymeren wieder entfernt.

In untergeordneten Mengen, d.h. in Mengen von bis zu 15 Gew.-%, vorzugsweise bis zu 5 Gew.-%, kann die NCO-Prepolymerbildung unter Zusatz von aliphatischen und insbesondere cycloaliphatischen Polyisocyanaten (Funktionalität f>2, vorzugsweise f≥3 (insbesondere Triisocyanaten)) erfolgen. Geeignete Isocyanate sind die Biurettriisocyanate, Allophanattriisocyanate oder Trimerisierungsprodukte von aliphatischen bzw. cycloaliphatischen Diisocyanaten wie insbesondere Hexan-1,6-diisocyanat und Isophorondiisocyanat. Weitere Triisocyanate sind beispielsweise 4-Isocyanatomethyl-1,8-octamethylen-diisocyanat oder 1,5,11-Triisocyanatoundecan. Weiterhin können 1 bis 15 Gew.-% an Polyisocyanaten, vorzugsweise 1 bis 10 und insbesondere 1 bis 5 Gew.-% an Polyisocyanaten eingesetzt werden, welche neben aromatisch gebundenen NCO-Gruppen nur aliphatisch oder cycloaliphatisch gebundene NCO-Gruppen aufweisen, z.B. Mischtrimerisate aus 3 Mol Toluylendiisocyanat und 2 Mol Hexandiisocyanat oder Isophorondiisocyanat. Bevorzugt enthalten die Polyisocyanate nur eine aromatische Gruppe und daneben nur aliphatisch oder cycloaliphatisch gebundene NCO-Gruppen.

Der NCO-Gehalt der NCO-Prepolymeren soll von 0,5 bis 6,0, vorzugsweise von 2 bis 4,5 Gew.-% betragen. Die mittlere Gesamtfunktionalität f" der NCO-Prepolymeren soll 1,95 bis 2,8, vorzugsweise 2,0 bis 2,7, betragen. Zur Erhöhung der Funktionalität werden z.B. höherfunktionelle Komponenten mitverwendet; eine Erniedrigung der Funktionalität kann z.B. durch Zusatz von geringen Mengen an monofunktionellen Komponenten, z.B. Monoalkoholen, asymmetrischem Dimethylhydrazin, 4-Amino-1,2,2',6,6'-pentamethylpiperidin oder Monohydrazide zur Einstellung von dem gewünschten Gesamtfunktionalitätsbereich f" erreicht werden.

Die Prepolymeren werden in flüssiger Form in der Schmelze oder unter Verwendung von den obengenannten inerten, organischen Lösungsmitteln, wie Ketonen, Estern, Ethern und aromatischen Kohlenwasserstoffen oder Kohlenwasserstoffgemischen hergestellt. Anstelle oder umsetzig zu diesen Lösungsmitteln können auch PVC-Weichmacher wie Dibutylphthalat, Dioctylphthalat, Phosphorsäuretrisalkylester in Mengen unter 25 Gew.-%, vorzugsweise unter 10 Gew.-%, bezogen aufzu bildendes Polyurethan, verwendet werden.

Aus technischen Gründen werden die NCO-Prepolymeren in flüssiger Form (aus Schmelze) oder aus hochkonzentrierten, vorzugsweise mindestens 90 Gew.-% Feststoff enthaltenden Mischungen verarbeitet, vorzugsweise beträgt die Konzentration von Lösungen 90 bis 100 Gew.-% Feststoff.

NCO-Prepolymere auf Basis von Hydroxypolyethern, insbesondere auf Basis von oxypropylen- und/oder oxyethylengruppenhaltigen Polyethern, stellen zumeist bei Raumtemperatur flüssige Produkte mit relativ niedriger Viskosität dar und werden vorzugsweise ohne Lösungsmittelzusatz verarbeitet. NCO-Prepolymere auf Polyesterbasis sind zumeist höherviskos oder gar erstarrend und müssen oft in Form ihrer Lösungen eingesetzt werden.

Die Viskosität dieser NCO-Prepolymeren bzw. NCO-Prepolymerlösungen soll im Bereich von 300 bis 100 000 mPa.s/25°C, bevorzugt 500 bis 15 000 und insbesondere 500 bis 5000 mPa.s/25°C liegen.

Bevorzugte isocyanatreaktive Komponenten sind Polyole oder Wasser. Als besonders bevorzugte Polyole kommen die üblichen Polyester, Polylactone, Polycarbonate sowie die Polyether oder ihre Gemische bzw. Mischkondensate in Betracht Darüber hinaus können die an sich bekannten höhermolekularen Hydroxythioether, Hydroxypolyesteramide, Hydroxy-polyacetale, Vinylpolymere mit Hydroxy-Endgruppen oder bereits Urethan- oder Harnstoffgruppen enthaltende Verbindungen, eingesetzt werden. Diese Verbindungen entsprechen dem Stand der Technik und werden in den Deutschen Offenlegungsschriften 28 54 384 und 29 20 501 aufgeführt.

Die in Frage kommenden, Hydroxylgruppen aufweisenden Polyester umfassen z.B. Umsetzungsprodukte von mehrwertigen, vorzugsweise zweiwertigen, und gegebenenfalls zusätzlichen dreiwertigen Alkoholen, mit mehrwertigen, vorzugsweise zweiwertigen Carbonsäuren, Polycarbonsäureanhydriden oder Polycarbonsäureestern von niedrigen Alkoholen. Die Polycarbonsäuren können aliphatischer, cycloaliphatischer, aromatischer und/oder heterocyclischer Natur sein und gegebenenfalls z.B. durch Halogenatome substituiert und/oder ungesättigt sein. Die Komponenten sind jedoch so ausgewählt, daß die Schmelzpunkte der entstehenden Polyester nicht über 60°C liegen, d.h. die Verwendung von aromatischen Carbonsäuren wie Terephthalsäure ist nur als Cokomponente in kleineren Mengen üblich. Als Beispiele für Dicarbonsäuren seien genannt: Bernsteinsäure, Adipinsäure, Korksäure, Azelainsäure, Sebacinsäure, Phthalsäure, Phthalsäureanhydrid, Isophthalsäure, Hexahydrophthalsäureanhydrid, Tetrachlorphthalsäureanhydrid, Endomethylentetrahydrophthalsäureanhydrid, Glutarsäureanhydrid, Maleinsäure, Fumarsäure, in geringeren Mengen z.B. Trimellitsäure oder andere mehr als zweiwertige Polycarbonsäuren. Als mehrwertige Alkohole kommen z.B. Ethylenglykol, Propandiol-1,2 und -1,3, Butandiol-1,4 und -2,3, Hexandiol-1,6, 2,2,4-Trimethylpentandiol-1,3 oder -2,5, Octandiol-1,8, Neopentylglykol, 1,4- oder 1,3-Bishydroxymethylcyclohexan, 2-Methyl-1,3-propandiol, Chinit, 1,4,3,6-Dianhydrohexite, Di-, Tri-, Tetra-und Polyethylenglykol, Di-, Tri- und Tetrapropylenglykol, Di-, Tri- und Tetrapolybutylenglykol, in Frage. In untergeordneten Anteilen können auch mehr als zweiwertige Alkohole, wie z.B. Glycerin, Trimethylolpropan, Hexanthol-1,2,6, Butandiol-1,2,4, Trimethylolethan, Pentaerythrit oder Sorbit mitverwendet werden. Für die Polyester aus mehr als zweiwertigen Komponenten gilt dabei die Beschränkung der Funktionalität, wie sie noch näher ausgeführt werden wird. Auch Polyester aus Lactonen, wie z.B. ε-Caprolacton, oder Hydroxycarbonsäuren, wie z.B. ω-Hydroxycapronsäuren, oder ihre Mischkondensate mit Polycapronsäuren und Polyolen sind einsetzbar. Auch die Hydroxypolyether sind solche der an sich bekannten Art und werden z.B. durch Polymerisation von Tetrahydrofuran und/oder Epoxiden wie Ethylenoxid, Propylenoxid, Butylenoxid, Styroloxid oder Epichlorhydrin mit sich selbst, z.B. in Gegenwart von Bortrifluorid, oder durch Anlagerung dieser Epoxide gegebenenfalls im beliebigen Gemisch oder blockartig nacheinander, an Startkomponenten mit reaktionsfähigen Wasserstoffatomen wie Wasser, Di- oder Polyalkohole, Aminoalkohole oder Amine, erhalten. Bekannte Startkomponenten sind z.B. Ethylenglykol, Propandiol-1,2 oder -1,3, Trimethylolpropan, 4,4'-Dihydroxydiphenylpropan, Anilin, Ammoniak, Ethanolamin oder Ethylendiamin. Beispiele sind höhere Polyoxyalkylenpolyole, z.B. Polyoxytetramethylenglykole oder Ethoxylierungs- und/oder Propoxylierungsprodukte von niedermolekularen Di- und Triolen oder Mono- oder Diaminen, z.B. propoxyliertes Trimethylolpropan, lineare oder verzweigte Polyoxypropylenglykolether, die anteilweise in statistischer, blockartiger oder endständiger Form Ethylenoxidreste enthalten können. Auch durch Vinylpolymerisate modifizierte Polyether, wie sie z.B. durch Polymerisation von Styrol oder Acrylnitril in Gegenwart von Polyethern entstehen, sowie Polyharnstoffe oder Polyhydrazodicarbonamide enthaltende Polyether sind geeignet, ebenso OH-Gruppen aufweisende Polybutadiene. Als Hydroxylgruppen aufweisende Polycarbonate kommen solche der an sich bekannten Art in Betracht, wie sie z.B. durch Umsetzung von Diolen wie Propandiol-1,3, Butandiol-1,4, Hexandiol-1,6 und/oder Di-, Tri- oder Tetraethylenglykol mit Dialkylcarbonaten, z.B. Diphenylcarbonat, oder mit Phosgen hergestellt werden können.

Die höhermolekularen Polyhydroxylverbindungen a) sollen einen Schmelzpunkt unter 60°C, vorzugsweise unter 45°C aufweisen, ein Molekulargewicht von 400 bis 10 000, vorzugsweise 600 bis 6000 besitzen und eine Funktionalität f bzw. f' von 1,9 bis 2,8, vorzugsweise 1,98 bis 2,7, aufweisen.

Die höhermolekularen Polyhydroxylverbindungen a) können gegebenenfalls einen Zusatz von niedermolekularen Di- und/oder Polyolen vom Molekulargewicht 62 bis 369 enthalten. Die Menge der niedermolekularen Polyole, vorzugsweise Diole ist jedoch im allgemeinen auf weniger als 2 Mol niedermolekulare Polyole, vorzugsweise weniger als 1 Mol niedermolekulare Di- oder Polyole pro Mol höhermolekulare Polyhydroxylverbindung beschränkt. Als niedermolekulare Di- oder Polyole seien beispielsweise genannt: Ethylenglykol, Propandiol-1,2, Butandiol-1,4, Hexandiol-1,6 oder -2,5, Neopentylglykol, 2,2,4-Trimethyl-pentandiol-1,3, 1,4,3,6-Dianhydrohexite, Diethylenglykol, 4,4'-Dihydroxydicyclohexylpropan oder Glycerin oder Trimethylolpropan.

Der Zusatz der niedermolekularen Verbindungen, insbesondere der trifunktionelle Polyole ist dahingehend beschränkt, daß auch die Gesamtmischung der höhermolekularen Polyhydroxylverbindungen und niedermolekularen Polyole in der Mischung eine Gesamtfunktionalität f' ergibt, die die Werte von 2,8 bzw. vorzugsweise 2,7 und insbesondere von 2,65 nicht überschreitet.

Polyhydroxypolyester mit einem Molekulargewicht zwischen 100 und 4000 (besonders 1500 bis 3000) aus Adipinsäure und gegebenenfalls bis 10 Mol-% (bezogen auf die gesamte Säurekomponente des Polyesters) an Phthalsäure, Isophthalsäure und/oder Terephthalsäure, und Glykolen mit 2 bis 10, vorzugsweise 4 bis 6 C-Atomen, sowie ihren Mischungen sowie gegebenenfalls bis zu 4 Mol-%, bevorzugt 0,1 bis 3 Mol-%, bezogen auf die Glykolkomponente des Polyesters, an Triolen, vorzugsweise Trimethylolpropan, werden bevorzugt eingesetzt. Besonders bevorzugt verwendet man dabei Adipinsäurepolyester, bei deren Herstellung so viel Trimethylolpropan mitverwendet wurde, daß im Durchschnitt die Funktionalität f' ca. 2,2 beträgt. Für den Aufbau dieser Polyester geeignete Glykole sind z.B. Ethylenglykol, Diethylenglykol, Triethylenglykol und Tetraethylenglykol, 1,2-Propandiol, 1,3-Propandiol, Di- und Tripropylenglykol, 1,4-Butandiol, 2,3-Butandiol, 1,5-Pentandiol, Neopentylglykol, 1,6-Hexandiol und 1,8-Octandiol. Man verwendet dabei vorzugsweise ein Gemisch von mindestens zweien dieser Diole im Molverhältnis 1:9 bis 9:1, vorzugsweise 3:7 bis 7:3, wobei es insbesondere bevorzugt ist, daß mindestens ein Glykol mit 4 bis 6 C-Atomen eingesetzt wird.

Bevorzugt sind Gemische aus einem in der Alkylgruppe verzweigten Glykol mit 4 bis 6 C-Atomen und einem anderen Alkylendiol mit 4 bis 6 C-Atomen; besonders bevorzugt sind Gemische aus 1,6-Hexandiol und Neopentylglykol.

Bevorzugte isocyanatreaktive Komponenten, bei denen es sich um Kettenverlängerer handelt, sind beispielsweise Ethylenglykol, Propandiol-1,2, Butandiol-1,4, Hexandiol-1,6 oder -2,5, Neopentylglykol, 2,2,4-Trimethyl-pentandiol-1,3, 1,4,3,6-Dianhydrohexite, Diethylenglykol, 4,4'-Dihydroxydicyclohexylpropan oder Trimethylolpropan, Glycerin oder Trimethylolethan.

"Sterisch gehinderte Polyamine" im Sinne der Erfindung sind halogenfreie Verbindungen mit mindestens 2, vorzugsweise 2 bis 4, Aminogruppen, die an mindestens einen, vorzugsweise einen oder 2, aliphatische(n) oder aromatische(n) C₅-C₁₂-Ring(e) gebunden sind, wobei diese Verbindungen den Aminogruppen benachbarte C₂-C₃₀-Alkylgruppen tragen.

Bevorzugte sterisch gehinderte Amine sind aromatische Amine, wie sie in ihrer hydrierten Form z.B. in DE-A 3 309 992 beschrieben sind: Darunter fallen z.B. Ietraalkyl-diamino-diphenylmethan-derivate (z.B. das 3,3'-, 5,5'-Tetraethyl- (oder -methyl)-4,4'-diamino-diphenylmethan oder 2,4- oder 2,6-Diamino-3,5-di-methyl-(oder ethyl)toluol.

Bevorzugte Auftragstechnik ist das Sprühverfahren, bei dem die zur Reaktion zu bringenden Komponenten airless (durch Entspannen) oder mit Hilfe von Luft, statisch oder mit Hilfe von Rührern vermischt und gleichzeitig oder anschließend verdüst werden.

Nach einer bevorzugten Ausführungsform verwendet man als Mischer eine Vorrichtung gemäß der DE-A-2 746 188, wobei man das Polyisocyanat und die isocyanatreaktive Komponente in eine Vormischkammer einspeist und mit einem Gas vorvermischt und dieses Gas-Flüssigkeits-Gemisch unmittelbar nach dessen Bildung einer kurzen, druckverlustarmen, statischen Mischvorrichtung mit sich kreuzenden Leitflächen und einem engen Verweilzeitspektrum zuführt. Zur bevorzugten Ausführungsform derartiger Mischvorrichtungen wird hiermit ausdrücklich auf die DE-A-2 746 188 verwiesen.

Das Sprühverfahren kann einmal oder mehrmals, eventuell sogar auf vorbehandeltem einstweiligem Träger, vorgenommen werden, ehe man das Leder einträgt. Zur Beschleunigung der Reaktion können bekannte Polyurethan-Katalysatoren wie beispielsweise DABCO, Dibutyl-zinndilaurat, Zinnoctoat etc. eingesetzt werden. Die Produkte können zur Farbgebung mit Pigmenten in bekannter Weise angefärbt sein. Der einstweilige Träger kann mit einem sog. Finish versehen sein.

Leder wie Spaltleder oder Lederfasermaterial kann in bekannter Weise vorbereitet eingesetzt werden.

Wenn man die Beschichtung in mehreren Stufen aufträgt, so wird der erste Auftrag als Deckstrich, jeder weitere als Zwischenstrich und der letzte Auftrag als Haftstrich bezeichnet Die Reaktionszeit der Deckstrichmischung kann zwischen 30 Sekunden und 300 Sekunden betragen. Die Reaktionszeit des sog. Haftstrichs kann zwischen 150 Sekunden und 500 Sekunden betragen. Vor dem Deckstrich kann auch ein sogenannter Finish auf dem einstweiligen Träger sein.

Wie schon erwähnt, ist das erfindungsgemäße Verfahren sowohl zur Direkt- als auch zur Umkehrbeschichtung von Leder geeignet. Bei der Direktbeschichtung wird das Zweikomponentenreaktivsystem auf die Oberfläche des zu beschichtenden Leders gesprüht und das so beschichtete Leder anschließend in an sich bekannter Weise in einem Trockenkanal eingebracht: bei Leder sollen 100°C Trockentemperatur möglichst nicht überschritten werden. Im allgemeinen trocknet man lederartige Substrate bei 60 bis 80°C/2 bis 4 Minuten, bevorzugt 3 bis 6 Minuten lang. Dabei reagiert bzw. härtet die Beschichtung aus und das Lösungsmittel, so vorhanden, verdampft.

Oftmals wird jedoch erfindungsgemäß nach dem Umkehrverfahren gearbeitet, wobei man die üblichen Beschichtungseinrichtungen verwendet, wie sie beispielsweise in "Das Leder", 1974, Heft 9, Seite 162 ff beschrieben werden. Eine entsprechende Verfahrensweise ist in der DE-OS 28 26 232 beschrieben.

Die in den nachfolgenden Beispielen genannten Teile und Prozente beziehen sich, sofern nicht anders angegeben, auf das Gewicht.

### Beispiele

### Beispiel 1

In einem Rührwerkskessel werden 10 kg eines NCO-Prepolymerisats, hergestellt aus Hexandiol-Neopentylglykol-Polyadipat (MG 2000) und Toluylen-diisocyanat eingesetzt, das einen NCO-Gehalt von 3,9 % aufweist. Zur Viskositätserniedrigung wird ein doppelwandiger Rührwerkskessel mit zirkulierendem Wasser benutzt, so daß das Addukt eine Temperatur von 80 bis 90°C hat. Über eine Zahnradpumpe wurde das NCO-Prepolymerisat in eine Mischpistole gepumpt (350 g/min).

In einem zweiten, auf gleiche Weise beheizbaren Behälter bei 55°C werden 890 g = 5 Mol Diethyl-diaminotoluol mit 2 790 g einer lösemittelfreien Pigmentpräparation (® Renol Pigmentpräparation von Hoechst, Frankfurt) in 2 190 g Dioctylphthalat, und 120 g eines verlauffördernden niedrigviskosen Siliconöls (®Levacast flüssig SN der Bayer AG, Leverkusen) vermischt und über eine Zahnradpumpe in einer Menge von 86 g/min, entsprechend einem NCO/NH₂-Äquivalentverhältnis von 1,0 in eine Zweikomponenten-Pistole gefördert.

Die beiden Produkte werden in der Pistole, wie in DE-A-27 46 188 beschrieben, gemischt und auf einen Trennträger aufgesprüht, der mit einer Geschwindigkeit von 4 m/min durch die Maschine transportiert wurde. Dieser Trennträger besteht aus einem aus 2-Komponenten-Silicon gefertigten Abbild einer Lederhaut oder anderen zu kopierenden Flächen. Ein Spaltleder wurde in die Reaktionsmischung gelegt. Nach dem Trocknen in einem Trockenschrank (80°C/6 min) wurde das beschichtete Spaltleder vom Trennträger abgezogen. Das beschichtete Leder widerstand 100 000 Biegungen im Bally-Flexometer (DIN 53 340).

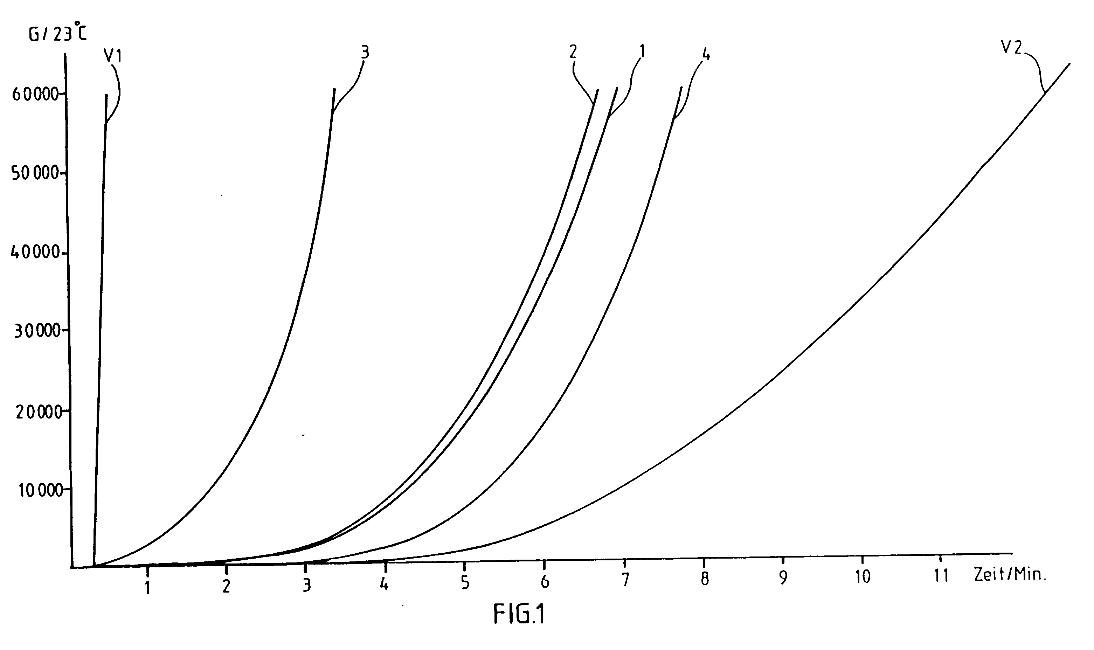

Die Kurve 1 in Fig. 1 veranschaulicht die Reaktivität des Beschichtungsmittels.

### Beispiel 1a

Beispiel 1 wurde mit den folgenden Unterschieden wiederholt:

Das Beschichtungsmittel wurde in 2 Schritten aufgebracht:

### 1. Schritt:

NCO-Prepolymerisat 350 g/min - Diethyldiaminotoluol (DETDA) - Präparation 86 g/min (NCO/NH-Äquivalentverhältnis: 1,0). Die Mischung wurde auf ein Trennpapier (®Ultracast der Firma S.D. Warren, USA) gesprüht. Nach kurzem Ablüften (1 Minute; Geschwindigkeit des Förderbandes 4 m/min) wurde eine 2. Schicht aufgesprüht.

### 2. Schritt:

NCO-Prepolymerisat 350 g/min - DETDA-Präparation 80 g/min (NCO/NH-Äquivalentverhältnis: 1,05). Nach 40 sec wurde ein Baumwoll/Polyester-Gewebe (280 g/m²) in die Reaktionsmischungen gelegt. Nach weiteren 40 sec wurde das Gewebe mit Hilfe von 3 Anpreßwalzen in die Reaktionsmischungen gepreßt. Nach 6 Minuten Trocknen bei 90°C wurde das beschichtete Gewebe (mit einer 0,22 mm dicken Beschichtung - 1. Schicht: 0,13 mm, 2. Schicht: 0,09 mm) vom Trennpapier abgezogen.

In ähnlicher Weise können glattes Leder, gebundene oder ungebundene Vliese, Holz und Papier beschichtet werden.

### Beispiel 2

Wie in Beispiel 1 beschrieben, wird die DEDTA-Präparation in gleicher Weise mit einem Addukt wie in DE-A-37 41 538, Beispiel III beschrieben, umgesetzt. Das Isocyanat-Prepolymerisat (5,8 % NCO) wurde in einer Menge von 290 g/min (= 400 mMol NCO), ebenso wie 121 g/min DETDA-Präparation (= 320 mMol NH) in die Mischpistole gepumpt. Das Verhältnis NCO:NH₂ beträgt 1,25.

Um einen schaumigen Film, der besonders auf Leder eine gute Wasserdampfdurchlässigkeit gibt (gemessen nach IUP 15, 0,8 mg/cm²·h) zu erhalten, werden in einer anderen Variante dieses Beispiels der DETDA-Präparation 2 % Wasser, bezogen auf DETDA, zugesetzt. Die Menge des in die Mischpistole gepumpten Produkts blieb unverändert. Der so erhaltene Film reagiert in gleicher Weise und Geschwindigkeit ab wie ein ohne Wasser hergestellter. Naturgemäß sind die Eigenschaften wie Filmfestigkeit, Elastizität und Biegeeigenschaften entsprechend der Schaumstruktur vermindert. Weichheit und Griff des beschichteten Materials nehmen mit der Schaumstruktur zu, was in vielen Fällen erwünscht ist. Die Reaktivität ist in Fig. 1, Kurve 2 wiedergegeben.

### Beispiel 3

Eine Mischung, wie sie in DE-A 3 741 538, Beispiel II, beschrieben ist, bestehend aus einer 1:1 (Gew.-)-Mischung eines Polyethers und eines Polyesters, wurde mit 2,4-/2,6-Diisocyanatotoluol (wie in der US-PS 4 893 883 beschrieben) zu einem NCO-Prepolymerisat umgesetzt.

383 g/min (300 mMol NCO) dieses Prepolymerisats wurden mit 103 g/min (270 mMol NH) DETDA-Präparation aus Beispiel 1 (NCO/NH₂-Äquivalentverhältnis: 1,1) mit der in Beispiel 1 beschriebenen Mischpistole verarbeitet.

Die Mischung wurde auf eine Siliconkautschukform gesprüht, und das Spaltleder wurde, wie in Beispiel 1 beschrieben, in die Reaktionsmischung eingebracht.

Die Reaktivität entsprach der Kurve 3 in Fig. 1.

### Beispiel 4

4,5 kg (4,5 Mol OH) eines linearen Polyester aus einer 1:1-molaren Mischung aus Caprolacton und Bis-(ω-hydroxyhexyl)-carbonat (MG 2000) wurden bei 60°C mit 170 g (3,8 Mol OH) Butandiol-1,4 und 120 g (1,2 Mol OH) Trimethylolpropan in einem geeigneten doppelwandigen Behälter aufgeschmolzen und die Schmelze wurde bei 60°C gehalten.

500 g einer Formulierung auf Acrylatbasis von braunem Eisenoxid (60 %ig in Cyclohexanon, ®Bayderm Braun C-TO der Bayer AG, Leverkusen), 100 g Siliconöl (®Levacast Fluid SN der Bayer AG, Leverkusen), 40 g Diazabicyclooctan, 20 g Di-tert-butyl-zinnlaurat und 450 g Ethylacetat wurden der geschmolzenen Mischung zugesetzt. In einem separaten Behälter werden 5 kg 4,4'-Diisocyanato-diphenylmethan (MDI 44) auf 45°C erwärmt. 212 g/min MDI 44 wurden in eine Mischpistole gepumpt, mit 500 g/min der oben hergestellten Polyolmischung (NCO/OH-Äquivalentverhältnis: 1,1) gemischt und auf ein Trennpapier gesprüht, das bereits mit einem Polyurethan auf Wasserbasis (®Impranil Dispersion DLF der Bayer AG, Leverkusen) 0,004 mm dick beschichtet war. Das Beschichtungsmittel bildet einen Film (Dicke: 0,18 mm), in den ein Vlies gelegt wurde, während die Reaktion noch ablief (35 sec nach dem Besprühen).

Die beschichteten, flexiblen Materialien sind besonders dadurch gekennzeichnet, daß sie außerordentlich weich sind und ihre ursprüngliche Weichheit konservieren können. Die Filme dieser Mischung besitzen eine Bruchdehnung von 300 % (DIN 53 328) bei einer Weiterreißfestigkeit von 4 daN. Die Bally-Biegungen (DIN 53351) sind über 150 000 (trocken), 100 000 (naß) und bei -25°C 30 000 Knickungen ohne Beschädigung. Der Reaktionsverlauf ist in Kurve 4 dargestellt.

### Vergleichsbeispiel 1

290 g/min (400 mMol NCO) eines Prepolymerisats entsprechend Beispiel 3 der DE-A 3 741 538 (≙ US-PS 4 310 493) wurden mit 68 g/min einer 35 %igen Lösung von 4,4'-Diamino-3,3'-dimethyl-dicyclohexylmethan in Ethylacetat entsprechend einem NCO/NH-Äquivalentverhältnis von 1,0 gemischt. Die Reaktion ist so schnell, daß kein zusammenhängender Film entsteht. Die Mischpistole ist innerhalb kurzer Zeit verstopft. Die Reaktionskurve V 1 steigt steil an.

### Vergleichsbeispiel 2

1000 Gew.-Teile eines linearen Hydroxylpolyester-Polycarbonates (Molekulargewicht 2000), hergestellt aus dem Esterglykol von ε-Caprolacton und Hexandiol-1,6 mit Diphenylcarbonat gemäß der DE-A-1 770 245, werden mit 262 Gew.-Teilen 4,4'-Diisocyanato-dicyclohexylmethan etwa 2 Stunden bei 115°C umgesetzt, bis der ermittelte NCO-Gehalt bei ca. 2,9 % (berechnet sind 3,3 %) liegt.

200 g/min (140 mMol NCO) des erhaltenen Prepolymerisats wurden mit 93 g/min (140 mMol NH) einer 20 %igen Lösung von 3,3'-Dichlor-4,4'-diaminodiphenylmethan in Methylethylketon gemischt. Die Reaktion ist zu langsam. Es kann damit z.B. kein Spaltleder beschichtet werden, weil die gemischte flüssige Masse zu tief in das Spaltleder eindringt und damit keine Beschichtung ergibt. Es ist keine reproduzierbare Oberfläche herstellbar. Die Reaktivität ist mit Kurve V2 wiedergegeben.

## Patentansprüche

1. Verfahren zur Beschichtung von Leder durch Mischen eines Beschichtungsmittels aus mindestens einem aromatischen Polyisocyanat und mindestens einer isocyanatreaktiven Komponente in einer Mischvorrichtung und anschließendes Auftragen des Beschichtungsmittels auf das Leder, dadurch gekennzeichnet, daß
a) das System aus Polyisocyanat und isocyanatreaktiver Komponente eine Reaktivität von 30 bis 500 sec bei 23°C aufweist,
b) die Beschichtung mit maximal 10 Gew.-% Lösungsmittel, bezogen auf das System, durchgeführt wird,
c) die isocyanatreaktive Komponente
(i) eine halogenfreie Verbindung mit mindestens 2 Aminogruppen, die an mindestens einen aromatischen C₅-C₁₂-Ring gebunden sind, wobei diese Verbindung den Aminogruppen benachbarte C₂-C₃₀-Alkylgruppen trägt,
(ii) gegebenenfalls Polyol und
(iii) gegebenenfalls Wasser enthält.

2. Verfahren nach Anspruch 1, dadurch gekennzeichnet, daß das Polyisocyanat ein Isocyanatprepolymeres ist und die isocyanatreaktive Komponente ein Diamin (i) ist.

3. Verfahren nach Anspruch 1, dadurch gekennzeichnet, daß als Polyisocyanat 4,4'-Di-isocyanato-diphenylmethan, 2,4- oder 2,6-Toluylendiisocyanat und als Kettenverlängerer Butandiol und als Polyol ein Ethylenglykol-Butandiol-Polyadipat verwendet werden.

4. Verfahren nach Anspruch 2, dadurch gekennzeichnet, daß die Verbindung (i) 2,4-Di-amino-3,5-diethyl-toluol ist.

5. Verfahren nach wenigstens einem der vorhergehenden Ansprüche, dadurch gekennzeichnet, daß lösungsmittelfrei gearbeitet wird.

6. Verfahren nach wenigstens einem der vorhergehenden Ansprüche, dadurch, gekennzeichnet, daß das Beschichten nach dem Umkehrverfahren durch Auftrag des Systems auf einen einstweiligen Träger mit einem Sprühverfahren und anschließende Belegung mit dem endgültigen Substrat Leder erfolgt.

7. Nach Verfahren gemäß Ansprüchen 1 bis 9 erhältliche beschichtete Leder.

## Claims

1. Process for coating leather by mixing a coating material comprising at least one aromatic polyisocyanate and at least one component reactive with isocyanate in a mixing device and subsequently applying the coating material to the leather,
characterised in that
a) the system comprising polyisocyanate and component reactive with isocyanate has a reactivity of 30 to 500 sec at 23°C,
b) the coating is carried out using at most 10 wt.% of solvent, based on the system,
c) the component reactive with isocyanate comprises
i) a halogen-free compound having at least 2 amino groups, which are bonded to at least one aromatic C₅-C₁₂ ring, this compound having C₂-C₃₀ alkyl groups adjacent to the amino groups,
ii) optionally polyol and
iii) optionally water.

2. Process according to claim 1, characterised in that the polyisocyanate is an isocyanate prepolymer and the component reactive with isocyanate is a diamine (i).

3. Process according to claim 1, characterised in that 4,4'-diisocyanatodiphenylmethane, 2,4- or 2,6-tolylene diisocyanate are used as polyisocyanate, butanediol is used as chain extender and an ethylene glycol butanediol polyadipate is used as polyol.

4. Process according to claim 2, characterised in that compound (i) is 2,4-diamino-3,5-diethyltoluene.

5. Process according to at least one of the preceding claims, characterised in that it is carried out free from solvents.

6. Process according to at least one of the preceding claims, characterised in that the coating is carried out according to the reversal process, by applying the system to a temporary support by a spray process and subsequently covering with the final leather substrate.

7. Coated leathers obtainable by the process according to claims 1 to 9.

## Revendications

1. Procédé de revêtement de cuir par mélange d'un produit de revêtement constitué d'au moins un polyisocyanate aromatique et au moins un composant réactif à l'isocyanate dans un dispositif de mélange et dépôt consécutif du produit de revêtement sur le cuir, caractérisé en ce que
a) le système de polyisocyanate et de composant réactif à l'isocyanate présente une réactivité de 30 à 500 s à 23°C,
b) on réalise le revêtement avec au maximum 10 % en poids de solvant, par rapport au système,
c) le composant réactif à l'isocyanate contient
(i) un composé sans halogène avec au moins deux groupes amino, qui sont fixés sur au moins un cycle aromatique C₅-C₁₂, où ce composé porte des groupes alkyle C₂-C₃₀ de manière contiguë aux groupes amino,
(ii) un polyol le cas échéant et
(iii) de l'eau le cas échéant.

2. Procédé selon la revendication 1, caractérisé en ce que le polyisocyanate est un prépolymère d'isocyanate et le composant réactif à l'isocyanate est une diamine (i).

3. Procédé selon la revendication 1, caractérisé en ce qu'on utilise comme polyisocyanate du 4,4'-diisocyanatodiphénylméthane, 2,4- ou 2,6-toluylènediisocyanate et comme prolongateur de chaîne du butanediol et comme polyol un éthylèneglycol-butanediol-polyadipate.

4. Procédé selon la revendication 2, caractérisé en ce que le composé (i) est le 2,4-diamino-3,5-diéthyl-toluène.

5. Procédé selon au moins l'une des revendications précédentes, caractérisé en ce qu'on travaille sans solvant.

6. Procédé selon au moins l'une des revendications précédentes, caractérisé en ce que le revêtement a lieu par le procédé de transfert par dépôt du système sur un support provisoire avec un procédé de pulvérisation et ensuite dépôt du substrat final en cuir.

7. Cuir revêtu qu'on peut obtenir selon le procédé des revendications 1 à 9.
